# EUROPEAN PATENT APPLICATION

(11) **EP 4 390 173 A1**
(43) Date of publication of application: **26.06.2024**
(21) Application number: 23208961.5
(22) Date of filing: 10.11.2023
(51) Int. Cl.: F16D 69/04

(54) **BRAKE SHOE FOR A VEHICLE**

(30) Priority: 23.12.2022 JP 2022206939
(71) Applicant: Nabtesco Corporation, Tokyo 102-0093 (JP)
(72) Inventor: Watanabe, Keisuke, Tokyo, 102-0093 (JP)
(74) Representative: Grünecker Patent- und Rechtsanwälte PartG mbB

(57) **Abstract**

A brake shoe (1) for a vehicle according to an aspect of the invention includes: a friction member (10) for braking a wheel by pressing a friction surface (11) of the friction member (10) against a wheel tread; and a base plate (20) having a support surface (21) and at least one claw (50), the support surface (21) supporting the friction member (10), the at least one claw (50) being provided on the support surface (21) and holding the friction member (10) inside the friction member (10). The at least one claw (50) is bent at a position away from the support surface (21) as viewed in a cross section (XZ cross section) that includes the axis extending in the longitudinal direction of the base plate (20) and the axis extending in the thickness direction of the friction member (10).

## Description

### TECHNICAL FIELD

The present invention relates to a brake shoe for a vehicle.

### BACKGROUND

There has been a conventionally known brake shoe for a vehicle configured to be pressed against a wheel tread of the vehicle for braking a wheel. For example, Patent Literature 1 discloses a brake shoe for a vehicle with a friction member fixed to a base metal. To ensure the fixing force between the base metal and the friction member, the base metal has claws on the surface (support surface) of the portion to which the friction member is fixed. The claws are bent and extend straight and obliquely relative to the support surface.

### RELEVANT REFERENCE

### LIST OF RELEVANT PATENT LITERATURE

Patent Literature 1: Japanese Patent Application Publication No. 2018-204626

### SUMMARY

However, when the brake shoe is pulled by the wheel during braking, a portion of the friction member hooked by the claws (e.g., the distal end side to which the claws extend) may be damaged. In this case, the friction member will probably fall off from the base metal (base plate). Therefore, there is a need for increasing the fixing force of the friction member to the base plate.

The present invention is intended to overcome the above drawback, and one object thereof is to provide a brake shoe for a vehicle capable of increasing the fixing force of the friction member to the base plate.

To overcome the above drawback, aspects of the present invention are configured as follows. (1) A brake shoe for a vehicle according to an aspect of the invention comprises: a friction member for braking a wheel by pressing a friction surface of the friction member against a wheel tread; and a base plate having a support surface and at least one claw, the support surface supporting the friction member, the at least one claw being provided on the support surface and holding the friction member inside the friction member, wherein the at least one claw is bent or curved at a position away from the support surface, as viewed in a cross section that includes an axis extending in a longitudinal direction of the base plate and an axis extending in a thickness direction of the friction member.

With this configuration, the friction member is held more firmly between the support surface and the claws than in the case where the claws are bent and extend straight and obliquely relative to the support surface as viewed in the cross section described above. This increases the fixing force for fixing the friction member to the base plate.

(2) In the brake shoe for a vehicle according to (1) above, it is also possible that the support surface is curved along the friction surface, as viewed in the cross section, and a portion of the at least one claw is shaped along the support surface, as viewed in the cross section.

(3) In the brake shoe for a vehicle according to (1) or (2) above, it is also possible that the at least one claw is formed by cutting and bending a portion of the base plate to form a curve.

(4) In the brake shoe for a vehicle according to (3) above, it is also possible that the base plate includes: a back plate having a mounting portion provided on a back surface thereof; and a reinforcing plate for reinforcing the back plate, the reinforcing plate being fixed to a fixing surface of the back plate opposite to the back surface, and the at least one claw is formed by cutting and bending a portion of the reinforcing plate.

(5) In the brake shoe for a vehicle according to (4) above, it is also possible that the reinforcing plate has one or more holes formed by cutting and bending a portion of the reinforcing plate.

(6) In the brake shoe for a vehicle according to (5) above, it is also possible that the one or more holes formed in the reinforcing plate are formed in a region where the back plate is present.

(7) In the brake shoe for a vehicle according to (6) above, it is also possible that the back plate has one or more base plate positioners for positioning the base plate, and the one or more base plate positioners are provided on the back surface of the back plate, the one or more base plate positioners are formed by cutting and bending a portion of the back plate, the back plate has one or more holes formed by cutting and bending a portion of the back plate, and the one or more holes formed in the back plate are formed in a region where the reinforcing plate is present, at different positions than the one or more holes formed in the reinforcing plate.

(8) In the brake shoe for a vehicle according to any one of (1) to (7) above, it is also possible that the at least one claw comprises a plurality of claws arranged along the longitudinal direction of the base plate.

(9) In the brake shoe for a vehicle according to (8) above, it is also possible that each of the plurality of claws is bent or curved in a direction away from a middle of the base plate, as viewed in the cross section.

(10) In the brake shoe for a vehicle according to any one of (1) to (9) above, it is also possible that the at least one claw comprises one or more first claws, the base plate has one or more second claws different from the one or more first claws, and the one or more second claws are provided on the support surface and hold the friction member inside the friction member, and the one or more second claws are bent or curved along a width direction of the base plate.

### ADVANTAGEOUS EFFECTS

The present invention can provide a brake shoe for a vehicle capable of increasing the fixing force of the friction member to the base plate.

### BRIEF DESCRIPTION OF THE DRAWINGS

Fig. 1 is a side view showing a brake shoe for a vehicle according to an embodiment.
Fig. 2 is a view from the direction of the arrow II of Fig. 1.
Fig. 3 is a view including a cross section along the arrows III-III of Fig. 2.
Fig. 4 is a view including a cross section along the arrows IV-IV of Fig. 1.
Fig. 5 is a cross sectional view showing a claw according to a first variation of the embodiment.
Fig. 6 is a cross sectional view showing a claw according to a second variation of the embodiment.

### DESCRIPTION OF THE PREFERRED EMBODIMENTS

Embodiments of the present invention will now be described with reference to the attached drawings. The following description of the embodiments will be based on a brake shoe for a railway vehicle as an example of a brake shoe for a vehicle. In the following description, terms such as "parallel," "orthogonal," "around" and "coaxial" describe relative or absolute positions. These terms are not only strictly used but also allow some tolerances and relative differences in angle and distance as long as the same effects can be still produced. In the drawings used for the following description, members are shown to different scales into recognizable sizes.

### <Brake Shoe for Vehicle>

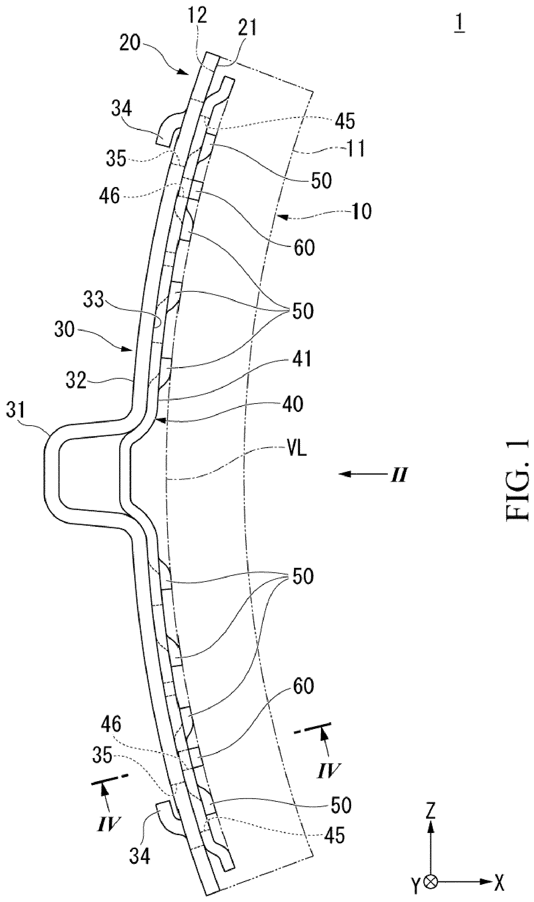

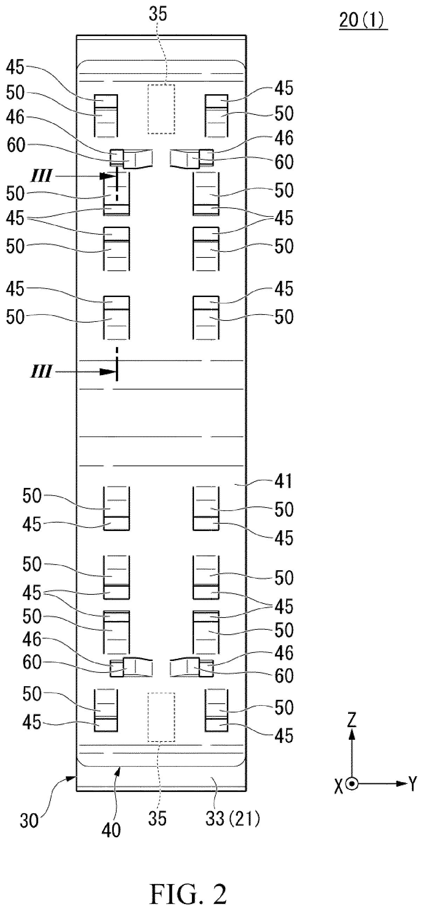

Fig. 1 is a side view showing a brake shoe 1 for a vehicle according to an embodiment. Fig. 2 is a view from the direction of the arrow II of Fig. 1. Referring to Figs. 1 and 2 together, the brake shoe 1 for a vehicle includes a friction member 10 and a base plate 20. In Fig. 1, the friction member 10 is shown by the chain double-dashed line. In Fig. 2, the friction member 10 is not shown.

In the following description, an XYZ orthogonal coordinate system is used as required. For example, when the brake shoe 1 for a vehicle is mounted on a vehicle, the X, Y and Z directions have the following relationship with respect to each direction of the vehicle. The X direction coincides with the front-rear direction of the vehicle. The Y direction coincides with the width direction of the vehicle. The Z direction coincides with the height direction of the vehicle (the gravitational direction), which is orthogonal to the X and Y directions. The following description is made with the arrows shown in the drawings indicating the X, Y and Z directions, and the head side and the tail side of each arrow indicate the positive (+) side and the negative (-) side, respectively. The upper side and the lower side in the gravitational direction are respectively denoted as the +Z side and the -Z side.

### <Friction Member>

The friction member 10 is substantially shaped like an arc conforming to the wheel tread. The friction member 10 is pressed against the wheel tread to generate a braking force by a frictional force. For example, the material of the friction member 10 is cast iron (an example of metal), synthetic resin (an example of resin), sintered material or the like.

For example, the friction member 10 may be made of a material including a metal and a resin. For example, the friction member 10 may be formed by using a synthetic resin as a binder and mixing carbon powder, iron powder, or other friction modifying materials with this binder. For example, the friction member 10 may include metal blocks or ceramic blocks. For example, the material of the friction member 10 can be changed in accordance with design specifications.

The friction member 10 has a friction surface 11 that is pressed against the wheel tread to generate friction, and a back surface 12 opposite to the friction surface 11. The friction member 10 brakes the wheel when the friction surface 11 is pressed against the wheel tread. For example, the friction member 10 is manufactured by pressure-bonding the back surface 12 to the base plate 20.

### <Base Plate>

The base plate 20 has a support surface 21 that supports the friction member 10, and claws 50 (corresponding to the first claws) that are provided on the support surface 21 and hold the friction member 10 inside the friction member 10. The claws 50 are bent at a position away from the support surface 21 as viewed in a cross section that includes the axis extending in the longitudinal direction of the base plate 20 and the axis extending in the thickness direction of the friction member 10. The axis extending in the longitudinal direction of the base plate 20 corresponds to the axis along the Z direction. The axis extending in the thickness direction of the friction member 10 corresponds to the axis along the X direction. The cross section including the axis extending in the longitudinal direction of the base plate 20 and the axis extending in the thickness direction of the friction member 10 is hereinafter also referred to as the "XZ cross section".

The support surface 21 is the surface contacted by the back surface 12 of the friction member 10. The support surface 21 is curved along the friction surface 11 of the friction member 10 as viewed in the XZ cross section.

For example, the material of the base plate 20 is cast iron or other metal. For example, the base plate 20 is formed of sheet metal. For example, the base plate 20 may be made of a material including a metal and a resin. For example, the material of the base plate 20 can be changed in accordance with design specifications.

The base plate 20 includes a back plate 30 and a reinforcing plate 40 that reinforces the back plate 30. The back plate 30 in this embodiment is formed of sheet metal. The back plate 30 has a back surface 32 having a mounting portion 31 provided thereon, and a fixing surface 33 on the opposite side to the back surface 32. The mounting portion 31 corresponds to the portion to which a brake shoe head (not shown) is mounted to support the brake shoe 1 for a vehicle. The fixing surface 33 of the back plate 30 also serves as the support surface 21 for supporting the friction member 10.

The reinforcing plate 40 in this embodiment is formed of sheet metal. The reinforcing plate 40 is fixed to the fixing surface 33 of the back plate 30 opposite to the back surface 32. For example, the reinforcing plate 40 is welded or otherwise joined to the fixing surface 33 of the back plate 30.

### <Claws (First Claws)>

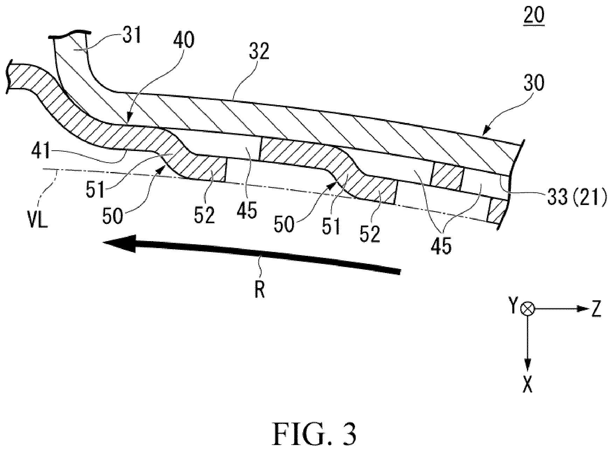

Fig. 3 is a view including a cross section along the arrows III-III of Fig. 2. In Fig. 3, the rotational direction of the wheel (an example of the direction of the rotational force of the wheel) is indicated by the arrow. Referring to Figs. 1 to 3 together, the claws 50, which are positioned inside the friction member 10, are disposed on the support surface 21 of the base plate 20. The claws 50 hold the friction member 10 inside the friction member 10. A portion of the claws 50 is shaped along the support surface 21 of the base plate 20 as viewed in the XZ cross section. The claws 50 are formed by cutting and bending a portion of the base plate 20 to form a smooth curve. The claws 50 are formed by cutting and bending a portion of the reinforcing plate 40.

Figs. 1 and 3 shows the virtual line VL, represented by a dashed-dotted line, which passes through the interior of the friction member 10 and curves along the friction surface 11, . As viewed in the XZ cross section, the virtual line VL is located away from one side 41 (+X side) of the reinforcing plate 40 toward the +X side. The claws 50 include a first extending portion 51 and a second extending portion 52 (corresponding to a portion of the claw 50). As viewed in the XZ cross section, the first extending portion 51, which is a portion of the reinforcing plate 40 cut and bent, extends obliquely toward the virtual line VL, and the second extending portion 52 extends along the virtual line VL from the distal end of the first extending portion 51. As viewed in the XZ cross section, the second extending portion 52 bends from the distal end of the first extending portion 51 and is connected to the distal end of the first extending portion 51.

A plurality of claws 50 are arranged along the longitudinal direction of the base plate 20 (corresponding to the Z direction). In the example shown in Fig. 1, eight (an example of a plurality) claws 50 are shown along the longitudinal direction of the base plate 20. In the example shown in Fig. 1, a total of eight claws 50 are shown, four on each side of the longitudinal direction of the base plate 20 (corresponding to the Z direction). In the example shown in Fig. 2, a total of 16 claws 50 are shown, eight on each side of the width direction of the base plate 20 (corresponding to the Y direction).

Referring to Fig. 1, each of the plurality of claws 50 is bent in the direction away from the middle of the base plate 20 (corresponding to the middle in the longitudinal direction) as viewed in the XZ cross section. For example, the plurality of claws 50 may include claws 50 that are bent toward the middle of the base plate 20 as viewed in the XZ cross section.

In the example shown in Fig. 1, of the eight claws 50, each of the two claws 50, the second from the +Z side and the second from the -Z side, is bent in the direction toward the middle of the base plate 20 in the longitudinal direction (corresponding to the inner side in the Z direction). That is, of the eight claws 50, each of the six claws 50 other than the two claws 50, the second from the +Z side and the second from the -Z side, is bent in the direction away from the middle of the base plate 20 in the longitudinal direction (corresponding to the outer side in the Z direction). In the example shown in Fig. 2, of the 16 claws 50, each of the 12 claws 50 other than the four claws 50, the second from the +Z side and the second from the -Z side, is bent in the direction away from the middle of the base plate 20 in the longitudinal direction (corresponding to the outer side in the Z direction).

### <Second Claws>

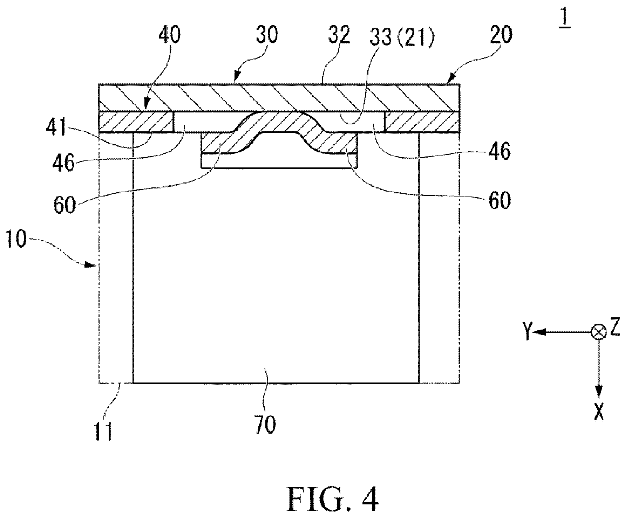

Fig. 4 is a view including a cross section along the arrows IV-IV of Fig. 1. Fig. 4 shows an example of a case in which the brake shoe includes a metal block 70. In Fig. 4, the friction member 10 is shown by the chain double-dashed line. Referring also to Fig. 4, the base plate 20 has second claws 60 that are provided on the support surface 21 and hold the friction member 10 inside the friction member 10. The second claws 60 are different from the first claws 50. The second claws 60 are bent along the width direction of the base plate 20 (corresponding to the Y direction). In the cross-sectional view of Fig. 4, the second claws 60, which are portions of the reinforcing plate 40 cut and bent to extend obliquely, extend outward in the width direction of the base plate 20. In the cross-sectional view of Fig. 4, the distal ends of the second claw 60 are in contact with the opposite sides of a recess in the metal block 70.

Referring to Fig. 1, a plurality of second claws 60 are provided at an interval in the longitudinal direction of the base plate 20 (corresponding to the Z direction). In the example shown in Fig. 1, two (an example of a plurality) second claws 60 are shown at an interval in the longitudinal direction of the base plate 20. In the example shown in Fig. 1, a total of two second claws 60 are shown, one on each side of the longitudinal direction of the base plate 20 (corresponding to the Z direction). In the example shown in Fig. 1, the second claws 60 are provided between the two of the plurality of first claws 50, the first and second from the outer side in the Z direction. In the example shown in Fig. 2, a total of four second claws 60 are shown, two on each side of the width direction of the base plate 20 (corresponding to the Y direction).

In the cross-sectional view of Fig. 4, each of the plurality of second claws 60 is bent in the direction away from the middle of the base plate 20 in the width direction. In the example in Fig. 2, each of the four second claws 60 is bent in the direction away from the middle of the base plate 20 in the width direction (corresponding to the outer side in the Y direction).

### <Base Plate Positioner>

Referring to Fig. 1, the back plate 30 has base plate positioners 34 for positioning the base plate 20, and the base plate positioners 34 are provided on the back surface 32 of the back plate 30. The base plate positioners 34 are claws for positioning the base plate 20 relative to the brake shoe head (not shown) for supporting the brake shoe 1 for a vehicle. The base plate positioners 34 are formed by cutting and bending a portion of the back plate 30. As viewed from the Y direction, the base plate positioners 34, which are portions of the back plate 30 cut and bent, extend obliquely and are bent toward the middle of the base plate 20 in the longitudinal direction.

A plurality of base plate positioners 34 are provided at an interval in the longitudinal direction of the base plate 20 (corresponding to the Z direction). In the example shown in Fig. 1, two (an example of a plurality) base plate positioners 34 are shown at an interval in the longitudinal direction of the base plate 20. In the example shown in Fig. 1, a total of two base plate positioners 34 are shown, one on each side of the longitudinal direction of the base plate 20 (corresponding to the Z direction). In the example shown in Fig. 1, the base plate positioners 34 are provided in the vicinity of one of the plurality of first claws 50, the first from the outer side in the Z direction.

### <Holes Formed in Reinforcing Plate>

Referring to Figs. 1 to 4 together, the reinforcing plate 40 has holes 45 and 46 formed by cutting and bending a portion of the reinforcing plate 40. The holes 45 and 46 formed in the reinforcing plate 40 include holes 45 for forming the first claws 50 and holes 46 for forming the second claws 60. The holes 45 and 46 formed in the reinforcing plate 40 are formed in the regions where the back plate 30 is present. The holes 45 and 46 formed in the reinforcing plate 40 are blocked on the -X side by the back plate 30.

### <Holes Formed in Back Plate>

Referring to Fig. 1, the back plate 30 has holes 35 formed by cutting and bending a portion of the back plate 30. The holes 35 formed in the back plate 30 are holes for forming the base plate positioners 34. The holes 35 formed in the back plate 30 are formed in the regions where the reinforcing plate 40 is present, at different positions than the holes 45 and 46 formed in the reinforcing plate 40. The holes 35 formed in the back plate 30 are blocked on the +X side by the reinforcing plate 40.

### <Advantageous Effects>

As described above, the brake shoe 1 for a vehicle according to the embodiment includes: the friction member 10 for braking a wheel when the friction surface 11 of the friction member 10 is pressed against a wheel tread; and the base plate 20 having the support surface 21 and the claws 50, the support surface 21 supporting the friction member 10, the claws 50 being provided on the support surface 21 and holding the friction member 10 inside the friction member 10. The claws 50 are bent at a position away from the support surface 21 as viewed in a cross section (XZ cross section) that includes the axis extending in the longitudinal direction of the base plate 20 and the axis extending in the thickness direction of the friction member 10.

With this configuration, the friction member 10 is held more firmly between the support surface 21 and the claws 50 than in the case where the claws 50 are bent and extend straight and obliquely relative to the support surface 21 as viewed in the XZ cross section. This increases the fixing force for fixing the friction member 10 to the base plate 20.

The support surface 21 according to the embodiment is curved along the friction surface 11 as viewed in the XZ cross section. A portion of the claws 50 is shaped along the support surface 21 as viewed in the XZ cross section. With this configuration, even when the friction member 10 is pulled by the rotational force of the wheel during braking, the rotational moment starting from the distal ends of the claws 50 and applied to the proximal ends of the claws 50 can be inhibited because a portion of the claws 50 extends along the direction R of the rotational force. This further increases the fixing force for fixing the friction member 10 to the base plate 20.

The claws 50 according to the embodiment are formed by cutting and bending a portion of the base plate 20 to form a curve. With this configuration, the claws 50 can be formed by bending (bending process) a single base plate 20. Therefore, manufacturing burden can be reduced compared to the case where another member is welded or otherwise joined to the base plate 20 to fabricate the claws 50. In addition, stresses (e.g., the rotational force transmitted from the wheel) can be dispersed compared to the case where the claws 50 are bent to form angles. This further increases the fixing force for fixing the friction member 10 to the base plate 20.

The base plate 20 according to the embodiment includes: the back plate 30 having the mounting portion 31 provided on the back surface 32 thereof; and the reinforcing plate 40 for reinforcing the back plate 30, the reinforcing plate 40 being fixed to a fixing surface 33 of the back plate 30 opposite to the back surface 32. The claws 50 are formed by cutting and bending a portion of the reinforcing plate 40. With this configuration, the claws 50 can be formed by bending (bending process) a single reinforcing plate 40. Therefore, manufacturing burden can be reduced compared to the case where another member is welded or otherwise joined to the reinforcing plate 40 to fabricate the claws 50.

The reinforcing plate 40 according to the embodiment has holes 45 formed by cutting and bending a portion of the reinforcing plate 40. With this configuration, the necessary fixing force can be secured by the claws 50 formed by cutting and bending a portion of the reinforcing plate 40, without having to drill holes in the back plate 30 to increase the fixing area for the friction member 10.

The holes 45 and 46 formed in the reinforcing plate 40 according to the embodiment are formed in the regions where the back plate 30 is present. With this configuration, it is possible to prevent the material of the friction member 10 from leaking out of the holes in the back plate 30 onto the back surface 12 while the friction member 10 is formed.

The back plate 30 according to the embodiment has base plate positioners 34 for positioning the base plate 20, and the base plate positioners 34 are provided on the back surface 32 of the back plate 30. The base plate positioners 34 are formed by cutting and bending a portion of the back plate 30. The back plate 30 has holes 35 formed by cutting and bending a portion of the back plate 30. The holes 35 formed in the back plate 30 are formed in the regions where the reinforcing plate 40 is present, at different positions than the holes 45 and 46 formed in the reinforcing plate 40. With this configuration, it is possible to position the base plate 20 with the base plate positioners 34 while preventing the material of the friction member 10 from leaking out onto the back surface 12 when forming the friction member 10. Therefore, manufacturing burden can be reduced.

A plurality of claws 50 according to the embodiment are arranged along the longitudinal direction of the base plate 20. With this configuration, the plurality of claws 50 further increases the fixing force for fixing the friction member 10 to the base plate 20.

As viewed in the XZ cross section, each of the plurality of claws 50 according to the embodiment is bent in the direction away from the middle of the base plate 20. With this configuration, in whichever direction the wheel rotates during braking, the rotational force transmitted from the wheel can be distributed by the claws 50 positioned upstream. This further increases the fixing force for fixing the friction member 10 to the base plate 20.

The claws 50 according to the embodiment are first claws 50. The base plate 20 has second claws 60 different from the first claws 50. The second claws 60 are provided on the support surface 21 and hold the friction member 10 inside the friction member 10. The second claws 60 are bent along the width direction of the base plate 20. For example, when the brake shoe has a metal block 70, the second claws 60 can be used for positioning the metal block 70 in the width direction. On the other hand, when the brake shoe does not have the metal block 70, the second claws 60 can contribute to increase of the fixing force against the forces in the width direction of the friction member 10. Thus, the appropriate role for each brake shoe can be fulfilled, without changing the structure of the base plate 20.

### <Variations>

The technical scope of the present invention is not limited to the embodiments described above but is susceptible of various modification within the purport of the present invention.

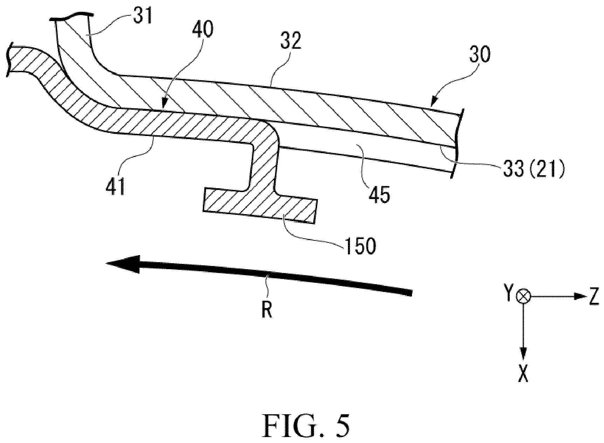

In the embodiment described above, the claws are bent at a position away from the support surface as viewed in a cross section that includes the axis extending in the longitudinal direction of the base plate and the axis extending in the thickness direction of the friction member, but this example is not limitative. For example, the claws may be curved at a position away from the support surface as viewed in the cross section described above. For example, as shown in Fig. 5, the claws 150 may be T-shaped as viewed in the XZ cross section. For example, the shape of the claws can be modified in accordance with design specifications.

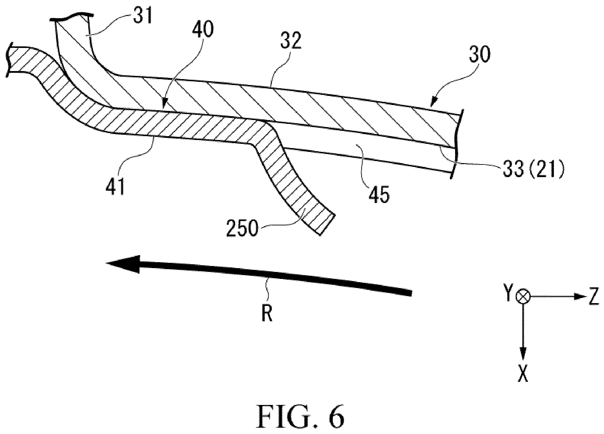

In the embodiment described above, the support surface is curved along the friction surface as viewed in the cross section described above, and a portion of the claws is shaped along the support surface as viewed in the cross section described above, but this example is not limitative. For example, it is possible that a portion of the claws is not shaped along the support surface as viewed in the cross section described above. For example, as shown in Fig. 6, the claws 250 as a whole may be curved like an arc as viewed in the XZ cross section. For example, the shape of the claws relative to the support surface can be modified in accordance with design specifications.

In the embodiment described above, the claws are formed by cutting and bending a portion of the base plate to form a curve, but this example is not limitative. For example, the claws are not necessarily formed by bending (bending process) a single base plate. For example, another member may be welded or otherwise joined to the base plate to fabricate the claws. For example, the claws may be bent to form angles. For example, the aspect of forming the claws can be modified in accordance with design specifications.

In the embodiment described above, the base plate includes: a back plate having a mounting portion provided on a back surface thereof; and a reinforcing plate for reinforcing the back plate, the reinforcing plate being fixed to a fixing surface of the back plate opposite to the back surface, but this example is not limitative. For example, it is also possible that the base plate includes the back plate but not the reinforcing plate. For example, the reinforcing plate can be provided in various manners in accordance with design specifications.

In the embodiment described above, the claws are formed by cutting and bending a portion of the reinforcing plate, but this example is not limitative. For example, the claws are not necessarily formed by bending (bending process) a single reinforcing plate. For example, another member may be welded or otherwise joined to the reinforcing plate to fabricate the claws. For example, it is also possible that the claws are formed by cutting and bending a portion of the back plate. For example, another member may be welded or otherwise joined to the back plate to fabricate the claws. For example, the aspect of forming the claws on the back plate or the reinforcing plate can be modified in accordance with design specifications.

In the embodiment described above, the reinforcing plate has holes formed by cutting and bending a portion of the reinforcing plate, but this example is not limitative. For example, holes may be drilled in the back plate to increase the fixing area for the friction member to secure the required fixing force. For example, the aspect of forming the holes in the back plate or the reinforcing plate can be modified in accordance with design specifications.

In the embodiment described above, the holes formed in the reinforcing plate are formed in the regions where the back plate is present, but this example is not limitative. For example, it is also possible that the holes formed in the reinforcing plate are formed in the regions where the back plate is absent. For example, the location of the holes formed in the reinforcing plate can be modified in accordance with design specifications.

In the embodiments described above, the back plate has base plate positioners for positioning the base plate, and the base plate positioners are disposed on the back surface of the back plate, but this example is not limitative. For example, it is also possible that the back plate does not have the base plate positioners. For example, the base plate positioners can be provided in various manners in accordance with design specifications.

In the embodiment described above, the base plate positioners are formed by cutting and bending a portion of the back plate, but this example is not limitative. For example, another member may be welded or otherwise joined to the back plate to fabricate the base plate positioners. For example, the aspect of forming the base plate positioners on the back plate can be modified in accordance with design specifications.

In the embodiment described above, the back plate has holes formed by cutting and bending a portion of the back plate, and the holes formed in the back plate are formed in the regions where the reinforcing plate is present, at different positions than the holes formed in the reinforcing plate, but this example is not limitative. For example, it is also possible that the holes formed in the back plate are formed in the regions where the reinforcing plate is absent. For example, the location of the holes formed in the back plate can be modified in accordance with design specifications.

In the embodiment described above, a plurality of claws are provided along the longitudinal direction of the base plate, but this example is not limitative. For example, it is also possible that only one claw is provided. For example, the number of the claws provided can be modified in accordance with design specifications.

In the embodiment described above, each of the plurality of claws is bent in the direction away from the middle of the base plate as viewed in the cross section described above, but this example is not limitative. For example, it is also possible that each of the plurality of claws is curved in the direction away from the middle of the base plate as viewed in the cross section described above. For example, it is also possible that each of the plurality of claws is bent or curved in the direction toward the middle of the base plate as viewed in the cross section described above. For example, each of the plurality of claws may be bent or curved in various directions in accordance with design specifications.

In the embodiment described above, the claws are first claws, the base plate has second claws different from the first claws, and the second claws are provided on the support surface and hold the friction member inside the friction member, but this example is not limitative. For example, it is also possible that the base plate has the first claws but not the second claws. For example, the second claws can be provided in various manners in accordance with design specifications.

In the embodiment described above, the second claws are bent along the width direction of the base plate, but this example is not limitative. For example, it is also possible that the second claws are curved along the width direction of the base plate. For example, the second claws can be bent or curved in various manners in accordance with design specifications.

In the embodiment described above, the brake shoe for a vehicle is a brake shoe for a railway vehicle, but this example is not limitative. For example, the present invention may be applied to vehicles other than railway vehicles. For example, the present invention may be applied to bicycles, motorcycles, four-wheeled vehicles, construction vehicles, and industrial vehicles.

The elements of the embodiments described above may be replaced with known elements within the purport of the present invention. Further, the variations described above may be combined. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

### LIST OF REFERENCE NUMBERS

- 1: brake shoe for vehicle
- 10: friction member
- 11: friction surface
- 20: base plate
- 21: support surface
- 30: back plate
- 31: mounting portion
- 32: back surface
- 33: fixing surface
- 34: base plate positioner
- 35: hole formed in back plate
- 40: reinforcing plate
- 45, 46: hole formed in reinforcing plate
- 50: first claw (claw) 60 second claw
- 150: claw
- 250: claw

## Claims

1. A brake shoe (1) for a vehicle, comprising:
a friction member (10) for braking a wheel by pressing a friction surface (11) of the friction member (10) against a wheel tread; and
a base plate (20) having a support surface (21) and at least one claw (50), the support surface (21) supporting the friction member (10), the at least one claw (50) being provided on the support surface (21) and holding the friction member (10) inside the friction member (10),
wherein the at least one claw (50) is bent or curved at a position away from the support surface (21), as viewed in a cross section that includes an axis extending in a longitudinal direction of the base plate (20) and an axis extending in a thickness direction of the friction member (10).

2. The brake shoe (1) for a vehicle according to claim 1,
wherein the support surface (21) is curved along the friction surface (11), as viewed in the cross section, and
wherein a portion of the at least one claw (50) is shaped along the support surface (21), as viewed in the cross section.

3. The brake shoe (1) for a vehicle according to claim 1 or 2, wherein the at least one claw (50) is formed by cutting and bending a portion of the base plate (20) to form a curve.

4. The brake shoe (1) for a vehicle according to claim 3,
wherein the base plate (20) includes:
a back plate (30) having a mounting portion (31) provided on a back surface (32) thereof; and
a reinforcing plate (40) for reinforcing the back plate (30), the reinforcing plate (40) being fixed to a fixing surface (33) of the back plate (30) opposite to the back surface (32), and
wherein the at least one claw (50) is formed by cutting and bending a portion of the reinforcing plate (40).

5. The brake shoe (1) for a vehicle according to claim 4, wherein the reinforcing plate (40) has one or more holes (45, 46) formed by cutting and bending a portion of the reinforcing plate (40).

6. The brake shoe (1) for a vehicle according to claim 5, wherein the one or more holes (45, 46) formed in the reinforcing plate (40) are formed in a region where the back plate (30) is present.

7. The brake shoe (1) for a vehicle according to claim 6,
wherein the back plate (30) has one or more base plate positioners (34) for positioning the base plate (20), and the one or more base plate positioners (34) are provided on the back surface (32) of the back plate (20),
wherein the one or more base plate positioners (34) are formed by cutting and bending a portion of the back plate (30),
wherein the back plate (30) has one or more holes (35) formed by cutting and bending a portion of the back plate (30), and
wherein the one or more holes (35) formed in the back plate (30) are formed in a region where the reinforcing plate (40) is present, at different positions than the one or more holes (45, 46) formed in the reinforcing plate (40).

8. The brake shoe (1) for a vehicle according to claim 1 or 2, wherein the at least one claw (50) comprises a plurality of claws (50) arranged along the longitudinal direction of the base plate (20).

9. The brake shoe (1) for a vehicle according to claim 8, wherein each of the plurality of claws (50) is bent or curved in a direction away from a middle of the base plate (20), as viewed in the cross section.

10. The brake shoe (1) for a vehicle according to claim 1 or 2,
wherein the at least one claw (50) comprises one or more first claws (50),
wherein the base plate (20) has one or more second claws (60) different from the one or more first claws (50), and the one or more second claws (60) are provided on the support surface (21) and hold the friction member (10) inside the friction member (10), and
wherein the one or more second claws (60) are bent or curved along a width direction of the base plate (20).
